# EUROPEAN PATENT APPLICATION

(11) **EP 2 898 996 A1**
(43) Date of publication of application: **29.07.2015**
(21) Application number: 14461504.4
(22) Date of filing: 23.01.2014
(51) Int. Cl.: B25J 9/16

(54) **Method of controlling a robotic system and a robotic system controller for implementing this method**

(71) Applicant: Plum Sp. z o.o., 16-001 Kleosin (PL)
(72) Inventor: Wawrzynski, Pawel, 05-090 Falenty Nowe (PL)
(74) Representative: Sielewiesiuk, Jakub

(57) **Abstract**

The object of the invention is a method of controlling a robotic system which implements an elementary action described in a configuration space of the robotic system, by means of a robotic system controller, the said controller implementing the set trajectory determined in the configuration space of the robotic system, and a learning component, including a unidirectional neural network, characterised in that
a) state of the robotic system at the current moment *t* is read, and point *x*, corresponding to this state, in the configuration space of this robotic system is found,
b) point *x1*, being the closest to point x on the set trajectory being currently implemented, is found,
c) point x2, located on the set trajectory being currently implemented, corresponding to the predicted state of the robotic system at a subsequent moment of time (*t*+*dt*), is determined,
d) vector of a random disturbance of the trajectory dx is determined, wherein dx includes at least a random component,
e) point x3 is calculated as the sum of x2 + *dx,*
f) point x3 is set as a target point in the configuration space of the robotic system at a subsequent moment of time (*t*+*dt*).

The object of the invention is also a robotic system controller programmed and configured to implement this method, in particular an appropriately programmed integrated circuit.

## Description

The object of the invention is a method of controlling a robotic system and a robotic system controller programmed and configured to implement this method. More particularly, the invention relates to the use of learning algorithms of robotic systems, with particular emphasis on optimising the performance of such systems.

In automatics, several solutions which use learning methods are known from the prior art.

Publication US2009326710 A1 relates to determining a trajectory by means of a first and second behaviour model which include a random element (using Gaussian distribution) with the use of known methods of calculation. Generation of a trajectory as a result of learning (so called "learning trajectory") is performed using a stochastic model.

Publication US2012078416 A1 relates to a mobile robot and a system for controlling the stability of the robot during its operation. In the document, generation of behaviour patterns for a moving robot, where the first state variables are proposed based on a stochastic model with the use of random variables, is described. The learning process is continued, i.e. repeated, until the expected value is reached, sensors being used for this purpose.

Publication EP1016981 A1 relates to the use of a neural network for generating a movement trajectory, previous behaviour models/patterns not being used when creating new trajectories. In the publication, generation of trajectories with the use of modules which use a neural network is described. It is not known whether, in the generation of trajectories, a random disturbance occurs.

Publication EP0462916 A1 relates to learning an optimal trajectory through random derogations from the known trajectory. Distribution of these derogations depends on the quality of the trajectory already obtained and includes the use of, among others, values from the normal distribution. If the trajectory meets expectations, then the calculated satisfaction index is high, and the used distribution of random derogations from trajectory is narrow, which implies a low probability of modification. In case the quality of the trajectory is unsatisfactory, the satisfaction index is low, and the distribution is wide, which implies a high probability of modification.

On the other hand, publication US2010292838 A1 relates to methods for predicting the falling of a two-legged robot. The position trajectories of the robot are generated based on current values of several parameters which are used to create a model refereed to as "learned representation" as a result of processing these data by means of known decision algorithms/models. This model is further classified by a dedicated module ("fall predictor") in terms of whether the tested state is already a stable state or there is a risk of falling. Variable pulses from various time periods are gathered, which are random values, e.g. values of force applied to the robot body.

Publication US2008235165 A1 relates to a device and a process for learning to recognise human facial expressions in real time. The material for learning by the device constitutes a collection of representative data, i.e. images which represent random sections of larger images. The material undergoes further processing with the final generation of weak hypotheses which present a lower level of error.

The above disclosures confirm that the uses of learning methods in automatics are only in development stage and that there are not any solutions which would ensure optimisation of performance of robotic systems.

Therefore, the aim of the present invention is to provide a solution which allows the optimisation of an elementary action performed by a robotic system, which implies finding such a method of implementing the robot operation which would be the most advantageous in terms of the given criteria, e.g. taking into account the duration of the elementary action or the related energy expenditure, fuel/energy consumption etc.

The object of the invention is a method of controlling a robotic system which implements an elementary action described in the configuration space of the robotic system, by means of a robotic system controller, the said controller implementing the set trajectory determined in the configuration space of the robotic system, and a learning component, including a unidirectional neural network, characterised in that
a) state of the robotic system at the current moment *t* is read, and point *x*, corresponding to this state, in the configuration space of this robotic system is found,
b) point *x1*, being the closest to point *x* on the set trajectory being currently implemented, is found,
c) point *x*2, located on the set trajectory being currently implemented, corresponding to the predicted state of the robotic system at a subsequent moment of time *(t+dt),* is determined,
d) vector of a random disturbance of the trajectory dx is determined, wherein dx includes at least a random component,
e) point *x*3 is calculated as the sum of x2 + *dx,*
f) point *x*3 is set as a target point in the configuration space of the robotic system at a subsequent moment of time (*t*+*dt*).

Preferably, the random component of vector dx is generated in a unidirectional neural network, as the network output increased by a value of noise generated from the normal distribution, wherein at the network input, an comprehensive and compact description of the current state of the robot, in particular a vector comprising a point in the configuration space, in which the robot is located, and a time derivative of this point, i.e. speed of the robot in the configuration space, are set. Preferably, the elementary action is cyclical.

The object of the invention is also a robotic system controller programmed and configured to implement the method according to the invention, in particular an appropriately programmed integrated circuit.

### Preferred Embodiments of the Invention

The invention will now be further presented in a preferred embodiment, with reference to the accompanying drawing which schematically illustrates the operation of the robotic system controller according to the invention, described in Examples 1 and 2.

The elementary action consists in passing, by the robot, from point A to point B in its configuration space or in performing a cyclical movement in the configuration space. An initial trajectory, namely a certain designed method of its implementation, i.e. a curve in the configuration space and, for each point of the curve, speed of movement along it, is associated with the elementary action. At any time, the robot performs a certain elementary action, imposed by a controller of higher order, e.g. software that controls the factory, which defines subsequent actions e. g. following the progress of the production process. The aim of the invention is to optimise the method of performing elementary actions. In the presented examples, the configuration space of the robotic system is two-dimensional, a current configuration/state of the robotic system correspond to point x in the configuration space, the said point x having the coordinates of *x* = *[x', x"]*.

Performing the elementary action corresponds to moving in the configuration space. In particular, moving in the configuration space, along a closed curve, for example along a circle, corresponds to the cyclical elementary action.

In the drawing:
a) the first coordinate of the trajectory set as a function of time;
b) the second coordinate of the trajectory set as a function of time;
c) two-dimensional configuration space and the elementary action as a curve in this space.
   *x* = *[x', x"]*- point in which the robotic system is located,
   *x1* = *[x1', x1"]*- point on the initial trajectory being the closest to the current one,
   *x*2 = *[x2'*, *x2"]* - point on the initial trajectory more subsequent by a quantum of time than *x1*,
   *x3*=*[x3'*, *x3"]*- target point in the configuration space, set for the movable elements of the robotic system.

### Example 1

### Robotic Manipulator

In an embodiment, there is provided a robotic manipulator, which performs a task in a factory, consisting in moving objects between locations. The manipulator includes a controller and consists of active elements, the movement of which being subject to control, and of rigid structural elements. The controller of the manipulator sets target positions for the movable elements of the robotic manipulator.

Positions of all the movable elements constitute a configuration of the manipulator, and all their possible positions constitute the configuration space of the manipulator. Moving the objects, by the manipulator, between locations consists in the implementation of a series of elementary actions, defined by a set of pairs of position points in the configuration space of the robot. The robotic system moves from the first point of the pair to the other one, wherein specific pair of points being chosen on an ongoing basis (every quantum of time *dt*) by the controller of the manipulator. The movement is also imposed with some restrictions taking into account avoiding collisions of the robot with surrounding objects, and with itself.

For each pair of position points of a movable element of the manipulator, a certain set trajectory (a set behaviour) is determined. This trajectory (the set trajectory) is further optimised, i.e. modified, so that the movement is implemented in the most efficient way, by the method according to the present invention.

The quality criteria of the implemented movement, which the learning component takes into account in the learning process, include:
- minimisation of time to implement the movement,
- fulfilment of restrictions imposed on the movement, in particular when the target point of the movement places the tip of the manipulator at an object and it is unacceptable that the speeding robot does not slow down before this object.

For each specific pair of points, the learning component of the manipulator controller, at any time, relies on the information on:
- the current position of point x in the configuration space, in which the manipulator is located,
- the current value of the manipulator's speed in the configuration space.

The controller of the robotic manipulator includes a controller learning component which constitutes a unidirectional neural network and which manifests its action every quantum of time *dt* by performing the consecutive actions:
- state of the robotic system at the current moment *t* is read, and point *x,* corresponding to this state, in the configuration space of this robotic system is found,
- point *x1*, being the closest to point *x* on the trajectory being currently implemented, is found. If, on the set trajectory, there is more of the closest points *x,* then the one among them which corresponds to the earliest time moment is adopted.
- point *x*2, located on the trajectory being currently implemented, corresponding to the predicted state of the robotic system at a subsequent moment of time (*t+dt*), is determined,
- vector of a random disturbance of the trajectory dx is determined, wherein dx includes at least a random component,
- point *x*3 is calculated as the sum of x2 + *dx,*
- point *x*3 is set as a target point in the configuration space of the robotic system at a subsequent moment of time (*t*+*dt*).

The controller learning component which includes a unidirectional artificial neural network designates, using known machine learning methods, a function transforming the current state of the robotic manipulator into vector of a random disturbance of the trajectory *dx.*

In the present embodiment, the random component of vector *dx* is generated from a unidirectional neural network, as the network output increased by a value of noise generated from the normal distribution, wherein at the network input, a point in the configuration space, in which the robot is located, i.e. *x*, and a time derivative of this point, i.e. speed of the robot in the configuration space, are set.

Trajectory modification consists in determining, by the controller, vector of a random disturbance of the trajectory dx, which modifies the set target point, which takes place after a single or multiple implementation of the elementary action.

The controller learning component of the manipulator according to the present embodiment may set various vectors of a random disturbance of the trajectory *dx* in the same state of the manipulator and learns to distinguish the better control from the worse one.

### Example 2

### Walking Robot

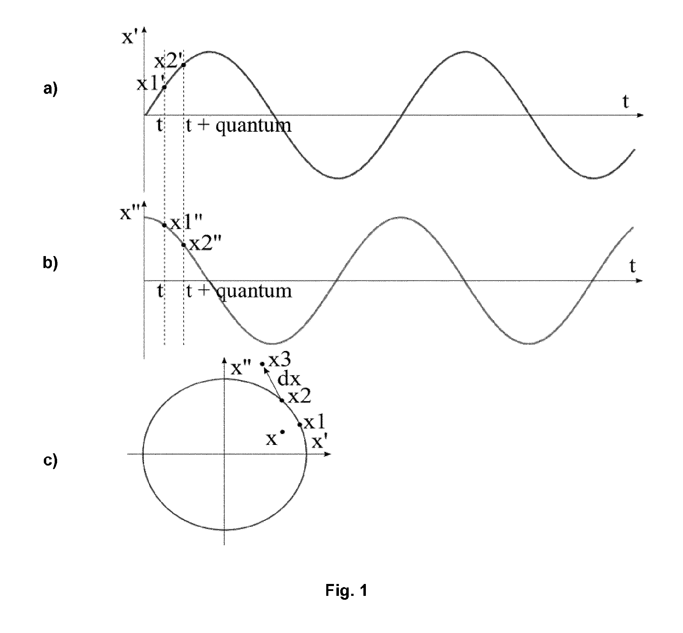

In an embodiment, there is provided a two-legged walking robot, the task of which consists in moving (optionally together with a carried object) in a direction set by the operator. The terrain across which the robot moves is flat. The walking robot includes a controller, the operation of which is illustrated in Fig. 1. The robot consists of active movable elements, the movement of which being subject to control, and of rigid structural elements. The controller of the robot sets target positions for movable elements of the robot. Positions of these movable elements constitute a configuration of the robot, and all their possible positions constitute the configuration space of the robot.

The elementary action is cyclical.

Trajectory known in the configuration space of the robot (a set trajectory) is defined. It corresponds to a slow gait of the robot. The controller component of the robot learns to modify the trajectory so that the gait of the robot is possibly the fastest and the most stable.

According to Fig. 1, the controller of the robotic manipulator includes a controller learning component which constitutes a unidirectional neural network and which manifests its action every quantum of time *dt* by performing consecutive actions described in Example 1.

The learning component of the controller, at any time, relies on the information on:
- point x in the configuration space, in which the robot is located,
- speed of the robot in the configuration space,
- inclination of the robot body,
- angular speed of rotation of the robot body,
- force of feet pressure on the ground.

For each pair of position points of a movable element of the manipulator, after reading the state of the robotic system, to which point x corresponds in the configuration space, a certain known trajectory is determined (a set behaviour). This trajectory (the set trajectory) is further optimised, i.e. modified, so that the movement is implemented in the most efficient way, by the method according to the present invention.

The quality criteria of the gait, which the learning component takes into account in the learning process, include:
- gait speed,
- limited accelerations, to which the body is subjected (jerking), which is a sign of gait stability.

## Claims

1. A method of controlling a robotic system which implements an elementary action described in a configuration space of the robotic system, by means of a robotic system controller, the said controller implementing a set trajectory determined in the configuration space of the robotic system, and a learning component, including a unidirectional neural network, **characterised in that**
a) state of the robotic system at the current moment *t* is read, and point *x,* corresponding to this state, in the configuration space of this robotic system is found,
b) point *x1*, being the closest to point *x* on the set trajectory being currently implemented, is found,
c) point *x*2, located on the set trajectory being currently implemented, corresponding to the predicted state of the robotic system at a subsequent moment of time *(t+dt),* is determined,
d) vector of a random disturbance of the trajectory dx is determined, wherein dx includes at least a random component,
e) point *x*3 is calculated as the sum of *x*2 + *dx,*
f) point *x*3 is set as a target point in the configuration space of the robotic system at a subsequent moment of time (*t*+*dt*).

2. The method of controlling a robotic system according to claim 1, **characterised in that** the random component of vector dx is generated in the unidirectional neural network, as the network output increased by a value of noise generated from the normal distribution, wherein at the network input, a comprehensive and compact description of the current state of the robot, in particular a vector comprising a point in the configuration space, in which the robot is located, and a time derivative of this point, i.e. speed of the robot in the configuration space, are set.

3. The method of controlling a robotic system according to claim 1 or 2, **characterised in that** the elementary action is cyclical.

4. A robotic system controller programmed and configured to implement the method according to any one of the preceding claims 1 to 3, in particular an appropriately programmed integrated circuit.
